# EUROPEAN PATENT APPLICATION

(11) **EP 2 450 786 A1**
(43) Date of publication of application: **09.05.2012**
(21) Application number: 10189774.2
(22) Date of filing: 03.11.2010
(51) Int. Cl.: G06F 3/14, G09G 5/00

(54) **A detection switch system of a video operation module**

(71) Applicant: Giga-Byte Technology Co., Ltd., Hsin Tien T'ai pei 231 (TW)
(72) Inventor: Chen, Chen-Shun, 231, Hsin Tien (TW); Hsu, Chi-Tao, 231, Hsin Tien (TW); Lin, Hou-Yuan, 231, Hsin Tien (TW)
(74) Representative: Schwerbrock, Florian

(57) **Abstract**

A detection switch system for video operation modules included a first video operation module, a second video operation module, a switch, an image data source and a detection module for operation loading. When an operation loading needed is less than a first critical operation loading of the first video operation module, the detection module for operation loading switches the switch to electrically connect with the first video operation module, and the image data source sends an image data to be operated to the first video operation module. When an operation loading needed is greater than the first critical operation loading of the first video operation module, the detection module for operation loading switches the switch to electrically connect with the second video operation module, and the image data source sends the image data to be operated to the second video operation module.

## Description

### BACKGROUND OF THE INVENTION

### 1. Field of the Invention

The present invention relates to a detection switch system, and more particularly to a detection switch system for video operation modules.

### 2. Description of the Prior Art

Technology in computer periphery, such as graphic programs, online games, etc., has been developing as the rapid growth of computer technology. Powerful video operation modules, such as dedicated graphic cards, become crucial in order to run the mentioned software more smoothly.

However, although dedicated graphic cards are more powerful in operation than integrated graphic chips on-board, dedicated graphic cards consume more electricity, which is usually unnecessary because most of the time, majority of the users often use computers to browse web pages or process documents, software that does not require large amount of video operation, instead of using computers to run graphic programs or playing online games. That is to say, a large amount of electricity is wasted if a user's computer is installed with a dedicated graphic card since the dedicated graphic card is used for the video operation.

### SUMMARY OF THE INVENTION

A detection switch system for video operation modules is provided according to an embodiment of the present invention. A detection module switches and selects different video operation modules for operation, according to an operation loading needed by an image data sent from an image data source.

The detection switch system for video operation modules of the present invention includes a first video operation module, a second video operation module, a switch, an image data source and a detection module for operation loading. The first video operation module includes a first critical operation loading. The second video operation module includes a second critical operation loading greater than the first critical operation loading. The switch is being switched to connect with the video operation module selected from the group consisting of the first video operation module and the second video operation module. The image data source is communicatively connected to the switch for sending an image data to be operated by the video operation module selected from the group consisting of the first video operation module and the second video operation module. The detection module for operation loading is for receiving the image data to be operated from the image data source and estimating an operation loading needed by the image data to be operated. When the operation loading needed is less than the first critical operation loading, the detection module for operation loading sends a first switch signal to the switch so that the switch switches its connection to the first video operation module, and the image data source sends the image data to be operated by the first video operation module. When the operation loading needed is greater than the first critical operation loading, the detection module for operation loading sends a second switch signal to the switch so that the switch switches its connection to the second video operation module, and the image data source sends the image data to the second video operation module so as to be operated by the second video operation module.

According to an embodiment of the present invention, the first video operation module includes an Internal Graphic Display (IGD) module.

According to an embodiment of the present invention, the second video operation module includes PCI Express Graphic (PEG) module.

According to an embodiment of the present invention, the detection switch system for video operation modules further includes at least an image output port. The image output port is electrically connected to the first video operation module and the second video operation module so as to receive an image data from the video operation module selected from the group consisting of the first video operation module and the second video operation module, wherein the image data is generated from the video operation module selected from the group consisting of the first video operation module and the second video operation module.

According to an embodiment of the present invention, the detection module for operation loading is connected electrically to the first video operation module and the second video operation module, and when the detection module for operation loading detects the first video operation module being abnormal, a second switch signal is sent to the switch so that the switch switches its connection to the second video operation module. When the detection module for operation loading detects the second video operation module being abnormal, a first switch signal is sent to the switch so that the switch switches its connection to the first video operation module.

When compared with the conventional computer system, a detection module for operation loading in one embodiment of the present invention switches and selects different video operation modules for operation in accordance with an operation loading needed by an image data sent from an image data source. Therefore, the detection switch system for video operation modules according to the present invention can save plenty of energy.

Moreover, the detection module for operation loading further detects whether the first or the second video operation module is abnormal to immediately switch its connection to perform normally, which is highly practical.

The foregoing summary is intended merely to provide a brief description of certain aspects of the invention. A more complete understanding of the invention can be obtained by referring to the claims and the following detailed description of the preferred embodiments in connection with the accompanying figures.

### BRIEF DESCRIPTION OF THE DRAWINGS

In the following disclosure, the invention is described with reference to the attached drawings. However, it should be understood that the drawings merely depict certain representative and/or exemplary embodiments and features of the present invention and are not intended to limit the scope of the invention in any manner. The following is a brief description of each of the attached drawings.

Fig. 1 is a schematic view of an embodiment of a detection switch system of the present invention, showing an operation loading needed is less than a first critical operation loading.

Fig. 2 is a schematic view of an embodiment of the detection switch system of the present invention, showing an operation loading needed is greater than a first critical operation loading.

### DETAILED DESCRIPTION OF THE PREFERRED EMBODIMENTS

In the following description, numerous details are set forth in order to provide a thorough understanding of the present invention. It will be appreciated by one skilled in the art that the explicitly described details are merely exemplary and that variations on these specific details and/or omissions of them are possible while still remaining within the scope of the present invention. In certain instances, well-known components are not described in detail in order not to unnecessarily obscure the present invention.

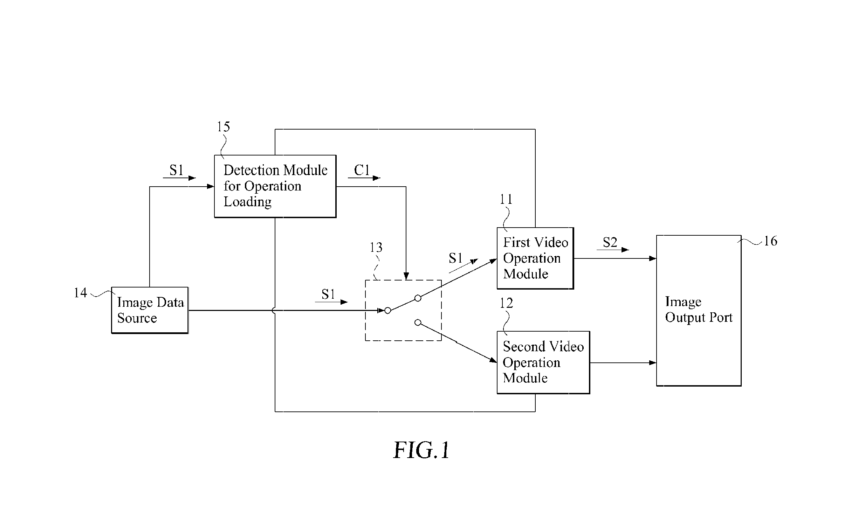

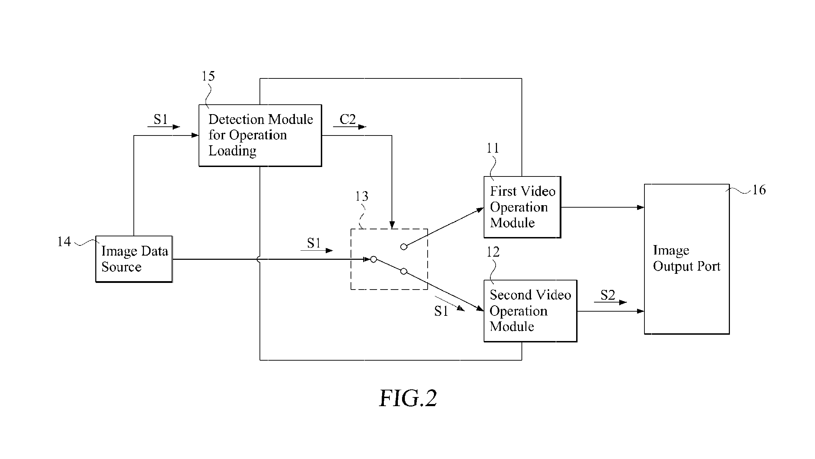

Referring to Fig. 1 and Fig. 2, wherein Fig. 1 is a schematic view of an embodiment of a detection switch system of the present invention, showing an operation loading needed is less than a first critical operation loading and Fig. 2 is a schematic view of an embodiment of the detection switch system of the present invention, showing an operation loading needed is greater than a first critical operation loading. The detection switch system for video operation modules according to an embodiment of the present invention includes a first video operation module 11, a second video operation module 12, a switch 13, an image data source 14 and a detection module for operation loading 15.

The first video operation module 11 includes a first critical operation loading. The second video operation module 12 includes a second critical operation loading greater than the first critical operation loading. The first critical operation loading and the second critical operation loading are for quantizing the operation loading needed by the action of operation, which, however, does not necessarily represent the maximum operation loading of the first video operation module 11 or the second video operation module 12. Moreover, according to an embodiment of the present invention, the first video operation module 11 includes an Internal Graphic Display (IGD) module while the second video operation module 12 includes PCI Express Graphic (PEG) module.

The switch 13 is used for being switched on to electrically connect with the video operation module selected from the group consisting of the first video operation module 11 and the second video operation module 12. The image data source 14 is communicatively and electrically connected to the switch 13 for sending an image data S 1 to the video operation module so as to be operated by the video operation module, which is selected from the group consisting of the first video operation module 11 and the second video operation module 12.

The detection module 15 for operation loading is used for receiving the image data S 1 from the image data source 14 and for estimating an operation loading needed by the image data S1 to be operated. According to an embodiment of the present invention, the detection module 15 for operation loading estimates the operation loading needed according to size of image, frequency of sampling, compression format, etc., of the image data S1 to be operated.

When the operation loading needed is less than the first critical operation loading, the detection module 15 for operation loading sends a first switch signal C1 to the switch 13 so that the switch 13 switches its connection to the first video operation module 11, and the image data source 14 sends the image data S 1 to be operated to the first video operation module 11 so as to be operated by the first video operation module 11 .When the operation loading needed is greater than the first critical operation loading, the detection module 15 for operation loading sends a second switch signal C2 to the switch 13 so that the switch 13 switches its connection to the second video operation module 12, and the image data source 14 sends the image data to be operated to the second video operation module 12 so as to be operated by the second video operation module 12 .

Furthermore, according to an embodiment of the present invention, the detection switch system for video operation modules further includes at least an image output port 16 which is electrically connected to the first video operation module 11 and the second video operation module 12 so as to receive an image data S2 from the video operation module selected from the group consisting of the first video operation module 11 and the second video operation module 12, wherein the image data S2 is generated from the video operation module selected from the group consisting of the first video operation module 11 and the second video operation module 12.

As a result, when compared with the conventional computer system, the detection module 15 for operation loading of an embodiment of the present invention is able to switch and select which video operation modules for operating the image data S 1 in accordance with an operation loading needed by the image data S 1 sent from the image data source 14. Therefore, The detection switch system for video operation modules according to an embodiment of the present invention can save plenty of energy.

Moreover, in accordance with o an embodiment of the present invention, the detection module 15 for operation loading is electrically connected to the first video operation module 11 and the second video operation module 12, and when the detection module 15 for operation loading detects the first video operation module 11 being abnormal, a second switch signal C2 is sent to the switch 13 so that the switch 13 switches its connection to the second video operation module 12. When the detection module 15 for operation loading detects the second video operation module 12 being abnormal, a first switch signal C 1 is sent to the switch 13 so that the switch 13 switches its connection to the first video operation module 11.

Therefore, apart from energy saving, the detection module 15 for operation loading further detects whether the first video operation module 11 and the second video operation module 12 is abnormal and immediately switch its connection to perform normally so that the computer can still display normally even though when one of the video operation modules is abnormal, which is highly practical.

While the present invention has been particularly shown and described with reference to certain preferred embodiments, it will be understood by those skilled in the art that various changes in form and detail may be without departing from the spirit and scope of the present invention. Accordingly, the invention is not limited to the precise embodiments shown in the drawings and described above. Rather, it is intended that all such variations not departing from the spirit of the invention be considered as within the scope thereof as limited solely by the claims appended hereto.

## Claims

1. A detection switch system comprising:
a first video operation module including a first critical operation loading;
a second video operation module including a second critical operation loading greater than the first critical operation loading;
a switch for being switched to connect electrically with a video operation module selected from a group consisting of the first video operation module and the second video operation module;
an image data source communicatively connected to the switch, the image data source sending an image data to be operated to the video operation module selected from the group consisting of the first video operation module and the second video operation module; and
a detection module for operation loading and for receiving the image data to be operated from the image data source and estimating an operation loading needed by the image data to be operated;
wherein, when the operation loading needed is less than the first critical operation loading, the detection module for operation loading sends a first switch signal to the switch so that the switch switches its connection to the first video operation module, and the image data source sends the image data to be operated to the first video operation module so as to be operated by the first video operation module ; when the operation loading needed is greater than the first critical operation loading, the detection module for operation loading sends a second switch signal to the switch so that the switch switches its connection to the second video operation module, and the image data source sends the image data to be operated to the second video operation module so as to be operated by the second video operation module.

2. The detection switch system according to claim 1, wherein the first video operation module includes an Internal Graphic Display (IGD) module.

3. The detection switch system according to claim 1, wherein the second video operation module includes PCI Express Graphic (PEG) module.

4. The detection switch system according to claim 1, further comprising at least an image output port, the image output port being electrically connected to the first video operation module and the second video operation module so as to receive an image data from the video operation module selected from the group consisting of the first video operation module and the second video operation module, wherein the image data is generated from the video operation module selected from the group consisting of the first video operation module and the second video operation module.

5. The detection switch system according to claim 1, wherein the detection module for operation loading is electrically connected to the first video operation module and the second video operation module, and when the detection module for operation loading detects the first video operation module being abnormal, a second switch signal is sent to the switch so that the switch switches its connection to the second video operation module; when the detection module for operation loading detects the second video operation module being abnormal, a first switch signal is sent to the switch so that the switch switches its connection to the first video operation module.
